# EUROPÄISCHE PATENTANMELDUNG

(11) **EP 4 418 439 A2**
(43) Veröffentlichungstag der Anmeldung: **21.08.2024**
(21) Anmeldenummer: 24154042.6
(22) Anmeldetag: 25.01.2024
(51) Int. Cl.: H01M 50/522, H01M 50/581, H01M 50/503

(54) **ELEKTRISCHES KONTAKTELEMENT ZUM ELEKTRISCHEN VERSCHALTEN VON BATTERIEZELLEN**

(30) Priorität: 20.02.2023 DE 102023104129
(71) Anmelder: Lisa Dräxlmaier GmbH, 84137 Vilsbiburg (DE)
(72) Erfinder: Demund, Alexander, 83512 Wasserburg (DE); Düzgün, Denis, 84030 Landshut (DE); Holzmann, Robert, 84137 Vilsbiburg (DE); Steckel, Michael, 84137 Vilsbiburg (DE)

(57) **Zusammenfassung**

Die Offenbarung betrifft ein elektrisches Kontaktelement (100) zum elektrischen Verschalten von Batteriezellen (120a, 120b) für batterie-elektrische Fahrzeuge, wobei das elektrische Kontaktelement (100) folgendes aufweist: ein elektrisch leitendes Basiselement (101), das mit einem ersten Pol (121) einer Batteriezelle (120a) elektrisch kontaktierbar ist; und ein oder mehrere aus dem Basiselement (101) hervorspringende elektrisch leitende Aufsteckelemente (102), die temperaturabhängig biegbar sind; wobei die ein oder mehreren Aufsteckelemente (102) bei einer ersten Temperatur eine erste Biegestellung einnehmen, bei der sie auf einen zweiten Pol (122) einer benachbarten Batteriezelle (120b) aufsteckbar sind, um eine elektrische Steckverbindung herzustellen; und wobei die ein oder mehreren Aufsteckelemente (102) bei einer zweiten Temperatur, die höher ist als die erste Temperatur, eine zweite Biegestellung einnehmen, bei der sich die Steckverbindung der ein oder mehreren Aufsteckelemente (102) mit dem zweiten Pol (122) der benachbarten Batteriezelle (120b) löst.

## Beschreibung

### Technisches Gebiet

Die vorliegende Erfindung betrifft das Gebiet der Batteriezellen für batterie-elektrische Fahrzeuge. Insbesondere betrifft die Erfindung ein elektrisches Kontaktelement zum elektrischen Verschalten von Batteriezellen für batterie-elektrische Fahrzeuge, insbesondere in der Ausführung einer Bimetall-Zellkrone.

### Stand der Technik

Die Batterien heutiger Elektro- und Hybridautos nutzen Batteriezellen mit der Lithium-Ionen Technologie zur Speicherung der elektrischen Energie für den Antrieb. Dieser Typ von Zelle kann unter bestimmten Bedingungen, beispielsweise mechanische Beschädigung, interner Kurzschluss, Überladung, Überhitzung, in einen thermisch instabilen Zustand gelangen. In diesem Zustand der Zelle - auch "Thermal Runaway (TR)" genannt - erzeugt die Zelle mehr Wärme als abgeführt werden kann. Werden nun in Folge eine oder mehrere Nachbarzellen überhitzt und reagieren diese ebenfalls exotherm, so pflanzt sich diese thermische Reaktion in einer Batterie fort bis im schlimmsten Fall alle Zellen reagieren. Bei dieser Fortpflanzung spricht man von "Thermal Propagation (TP)". Die bei der Thermal Propagation freiwerdende Energie führt in der Regel zu einem Fahrzeugbrand.

Zur Vermeidung von Thermal Propagation sind mehrere Ansätze in Entwicklung. Beim grundsätzlichen Design von TP-sicheren Batterien wird auf ausreichend Abstände zwischen den Zellen oder Zellmodulen geachtet. Darüber hinaus ist es möglich, weniger reaktive Zellen zu verwenden. Bei beiden Ansätzen ist jedoch mit einer reduzierten Energie und Leistungsdichte zu rechnen. Weiterhin werden Hitzeschutzmaterialien/-folien verwendet, um die Ausbreitung von TR zwischen Zellmodulen zu unterbinden. Diese Hitzeschutzmaterialien wirken primär gegen hohe Strahlungswärme, die durch eine reagierende Zelle frei wird. Wird die Wärme über fest installierte Leitungen übertragen, so haben Hitzeschutzmaterialien keine Wirkung.

### Beschreibung der Erfindung

Eine Aufgabe der Erfindung ist es daher, ein Konzept zur Verhinderung der Fortpflanzung eines Thermal Runaway durch die gesamte Batterie zu schaffen, insbesondere ohne die Leistungsdichte der Batterie zu beeinträchtigen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die erfinderische Lösung basiert auf den folgenden Überlegungen. Ein Pfad der Fortpflanzung erfolgt über die serielle Verschaltung von Rundzellen. Auf dem Pluspol der Zelle ist eine im Folgenden näher beschriebene "Zellkrone" aufgeschweißt. Diese Krone (mit der angeschweißten Zelle) wird auf den Minuspol der Folgezelle aufgesteckt und kontaktiert diese elektrisch. Im Falle eines Thermal Runaway wird thermische Energie der reagierenden Zelle über die Zellkrone übertragen und führt somit zur Überhitzung der Nachbarzelle. Um die Überhitzung über den elektrischen Kontakt zu verhindern, wird die Zellkrone so gestaltet, dass sie bei hohen Temperaturen die Kontaktfinger aufspreizt und somit den elektrischen und thermischen Kontakt zur Folgezelle unterbricht. Als Material für die Zellkrone sind Bimetall-Verbindungen geeignet.

Als besondere technische Vorteile des erfindungsgemäßen Konzepts ergeben sich daher: TP-sichere Batterien sind noch nicht Stand der Technik. Erst seit Anfang 2021 ist das Bestehen des TP-Tests für die Chinesische Zulassung Pflicht. Für den ECE-Raum werden TP-Maßnahmen voraussichtlich erst ab 2023 vorgeschrieben. Die Erfindung ist eine elegante und einzigartige Maßnahme, um TP direkt an der Entstehungs-Quelle zu verhindern. Die lokale Wirkung der Erfindung erlaubt eine höhere Packungsdichte von Rundzellen bei gleichzeitig gegebener TP-Sicherheit.

Gemäß einem ersten Aspekt wird die oben beschriebene Aufgabe gelöst durch ein elektrisches Kontaktelement zum elektrischen Verschalten von Batteriezellen für batterie-elektrische Fahrzeuge, wobei das elektrische Kontaktelement folgendes aufweist: ein elektrisch leitendes Basiselement, das mit einem ersten Pol einer Batteriezelle elektrisch kontaktierbar ist; und ein oder mehrere aus dem Basiselement hervorspringende elektrisch leitende Aufsteckelemente, die temperaturabhängig biegbar sind; wobei die ein oder mehreren Aufsteckelemente bei einer ersten Temperatur eine erste Biegestellung einnehmen, bei der sie auf einen zweiten Pol einer benachbarten Batteriezelle aufsteckbar sind, um eine elektrische Steckverbindung herzustellen; und wobei die ein oder mehreren Aufsteckelemente bei einer zweiten Temperatur, die höher ist als die erste Temperatur, eine zweite Biegestellung einnehmen, bei der sich die Steckverbindung der ein oder mehreren Aufsteckelemente mit dem zweiten Pol der benachbarten Batteriezelle löst.

Ein solches elektrisches Kontaktelement verhindert effizient die Fortpflanzung eines Thermal Runaway durch die gesamte Batterie, ohne dabei die Leistungsdichte der Batterie zu beeinträchtigen. Durch das Kontaktieren des Basiselements auf dem ersten Pol der Batteriezelle und das Aufstecken der Aufsteckelemente auf dem zweiten Pol der benachbarten Batteriezelle wird das Übertragen der thermischen Energie im Falle eines Thermal Runaway auf die benachbarte Batteriezelle verhindert, da die Aufsteckelemente bei einer zweiten Temperatur, die entsprechend der Temperatur im Thermal Runaway eingestellt werden kann, der elektrische und thermische Kontakt zur benachbarten Batteriezelle gelöst wird.

Die elektrische Verschaltung der Batteriezellen kann eine parallele oder eine serielle Verschaltung sein oder eine Kombination aus einer parallelen und seriellen Verschaltung.

Gemäß einer beispielhaften Ausführungsform des elektrischen Kontaktelements ist das Basiselement mit dem ersten Pol der Batteriezelle und/oder einer Stromschiene stoffschlüssig verbindbar, wobei die Stromschiene ausgebildet ist, eine oder mehrere Batteriezellen elektrisch zu verbinden.

Dies bringt den technischen Vorteil, dass das Basiselement fest mit der Batteriezelle verbunden ist und ein Umbiegen der Aufsteckelemente bei der zweiten Temperatur, um die benachbarte Batteriezelle von der Batteriezelle zu lösen, aus dieser festen Verbindung mit der Batteriezelle erfolgen kann.

Gemäß einer beispielhaften Ausführungsform des elektrischen Kontaktelements sind die ein oder mehreren Aufsteckelemente in der ersten Biegestellung sowohl auf den ersten Pol der Batteriezelle als auch auf einen ersten Pol oder den zweiten Pol der benachbarten Batteriezelle aufsteckbar, um eine beidseitige Steckverbindung zwischen der Batteriezelle und der benachbarten Batteriezelle herzustellen. Es lassen sich auch Gruppen von Polen verbinden. Zum Beispiel 3 Zellen mit dem ersten Pol und 3 Zellen mit dem zweiten Pol.

Dies bringt den technischen Vorteil, dass das elektrische Kontaktelement flexibel einsetzbar ist, um mehrere Batteriezellen lösbar miteinander elektrisch und thermisch zu verbinden.

Gemäß einer beispielhaften Ausführungsform des elektrischen Kontaktelements liegt die erste Temperatur unterhalb einer kritischen Temperatur, bei welcher die Batteriezelle in einen Thermischen Runaway Zustand übergeht; und die zweite Temperatur liegt oberhalb der kritischen Temperatur.

Dies bringt den technischen Vorteil, dass unterhalb der Temperatur des Thermischen Runaway die Batteriezelle mit der benachbarten Batteriezelle fest verschaltet ist, während es erst bei einer Temperatur oberhalb des Thermischen Runaway zu einer Ablösung der benachbarten Batteriezelle von der sich im Thermischen Runaway befindlichen Batteriezelle kommt.

Gemäß einer beispielhaften Ausführungsform des elektrischen Kontaktelements sind das Basiselement und die ein oder mehreren Aufsteckelemente zumindest teilweise aus einem Bimetall geformt, das aus zwei Metallen unterschiedlicher Wärmeausdehnungskoeffizienten aufgebaut ist.

Dies bringt den technischen Vorteil, dass mit dem Bimetall das Umbiegen der Aufsteckelemente elegant und effizient realisiert werden kann. Das Bimetall ist ein Metallstreifen, der aus zwei übereinander liegenden Schichten unterschiedlicher Metalle besteht. Die beiden Schichten sind miteinander stoffschlüssig oder durch formschlüssiges Material verbunden. Aufgrund der unterschiedlichen Wärmeausdehnungskoeffizienten der verwendeten Metalle dehnt sich eine der Schichten stärker aus als die andere, wodurch sich der Streifen biegt.

Gemäß einer beispielhaften Ausführungsform des elektrischen Kontaktelements sind das Basiselement und die ein oder mehreren Aufsteckelemente zumindest in einem Übergangsbereich, in dem die ein oder mehreren Aufsteckelemente aus dem Basiselement hervorspringen, aus dem Bimetall geformt.

Dies bringt den technischen Vorteil, dass nicht das gesamte elektrische Kontaktelement aus dem Bimetall geformt sein muss, denn es reicht, wenn gewisse Stellen, die besonders auf ein Umbiegen reagieren, aus dem Bimetall geformt sind.

Gemäß einer beispielhaften Ausführungsform des elektrischen Kontaktelements besteht das Bimetall aus einem ersten Metall und einem zweiten Metall, wobei das erste Metall einen unterschiedlichen Wärmeausdehnungskoeffizienten aufweist als das zweite Metall; und wobei das erste Metall nur innerhalb des Übergangsbereichs auf einer Außenseite oder einer Innenseite des Kontaktelements ausgeformt ist. Auf der Außenseite hat das erste Metall einen niedrigeren Wärmeausdehnungskoeffizienten als auf der Innenseite.

Dies bringt den technischen Vorteil, dass das Bimetall nur innerhalb des Übergangsbereich, in dem die ein oder mehreren Aufsteckelemente aus dem Basiselement hervorspringen, aus dem Bimetall geformt sein muss. Damit kann Material eingespart werden und die restlichen Bereiche des elektrischen Kontaktelements können aus einem anderen Material gefertigt sein.

Gemäß einer beispielhaften Ausführungsform des elektrischen Kontaktelements sind die ein oder mehreren Aufsteckelemente aus dem Bimetall geformt und das Basiselement ist aus einem dritten Material geformt; und die ein oder mehreren Aufsteckelemente sind in dem Übergangsbereich auf das dritte Material des Basiselements gefügt.

Dies bringt den technischen Vorteil, dass die Aufsteckelemente, die für das Aufstecken und Ablösen der benachbarten Batteriezelle von der Batteriezelle verantwortlich sind, sich besonders gut biegen können, während das Basiselement gute Stabilitätseigenschaften aufweisen kann.

Gemäß einer beispielhaften Ausführungsform des elektrischen Kontaktelements sind das Basiselement und die ein oder mehreren Aufsteckelemente aus einem Blechstück geformt.

Dies bringt den technischen Vorteil, dass das elektrische Kontaktelement sich einfach fertigen lässt, beispielsweise durch geeignete Biege- und Formprozesse eines Blechstücks, um aus dem rohen Blech das Basiselement und die Aufsteckelemente zu fertigen.

Gemäß einer beispielhaften Ausführungsform des elektrischen Kontaktelements ist das Blechstück kronenförmig ausgebildet und weist ein rundes oder eckiges Kopfstück auf, welches das Basiselement ausbildet, von dem sternförmig mehrere Zacken hervorspringen, welche die ein oder mehreren Aufsteckelemente ausbilden.

Dies bringt den technischen Vorteil, dass mit einer solchen Zellkrone sich effizient die serielle und/oder parallele Verschaltung der Batteriezellen durchführen lässt. Das Kopfstück kann mit der Batteriezelle fest verbunden werden, beispielsweise über eine Verschweißung mit dem ersten Pol, währen die sternförmig aus dem Kopfstück hervorspringenden Zacken in effizienter Weise die Greiffunktion übernehmen können und sich bei Erreichen der kritischen Temperatur einfach aufbiegen lassen, um den thermischen Kontakt zur Batteriezelle zu unterbrechen.

Gemäß einer beispielhaften Ausführungsform des elektrischen Kontaktelements befindet sich das elektrische Kontaktelement bei der ersten Temperatur in einem metastabilen ersten Zustand, in dem die ein oder mehreren Aufsteckelemente auf den zweiten Pol der benachbarten Batteriezelle aufsteckbar sind; und das elektrische Kontaktelement nimmt beim Übergang zu der zweiten Temperatur einen stabilen zweiten Zustand ein, in dem die ein oder mehreren Aufsteckelemente nicht mehr auf den zweiten Pol der benachbarten Batteriezelle aufsteckbar sind und das elektrische Kontaktelement nicht mehr in den ersten Zustand zurückkehren kann.

Dies bringt den technischen Vorteil, dass bei Vorliegen des Thermal Runaway Zustands das Aufbiegen der Aufsteckelemente nicht mehr reversibel ist, da der stabile Zustand erreicht ist. Somit kann es auch nicht mehr zu einem unbeabsichtigten thermischen Kontakt mit der benachbarten Batteriezelle kommen, sobald sich die Batteriezelle im Thermal Runaway Zustand befindet.

Das elektrische Kontaktelement kann damit einen sogenannten "Knackfrosch" bilden.

### Kurze Figurenbeschreibung

Im Folgenden wird die Erfindung anhand von Ausführungsbeispielen und den Figuren näher beschrieben. Es zeigen:
- Fig. 1a: eine 3-D Darstellung der seriellen Verschaltung von Batteriezellen;
- Fig. 1b: eine 3-D Darstellung eines erfindungsgemäßen elektrischen Kontaktelements 100 gemäß einer Ausführungsform;
- Fig. 1c: eine schematische Darstellung des elektrischen Kontaktelements 100 im Profil;
- Fig. 1d: eine Draufsicht auf eine Verschaltung von zwei prismatischen Batteriezellen gemäß einer Ausführungsform;
- Fig. 1e: eine Seitenansicht auf die Verschaltung von zwei prismatischen Batteriezellen der Figur 1d;
- Fig. 1f: eine Seitenansicht auf eine parallele Verschaltung von zwei Rundzellen gemäß einer Ausführungsform;
- Fig. 1g: eine Seitenansicht auf eine serielle Verschaltung von zwei Batteriezellen mit beidseitiger Steckverbindung gemäß einer Ausführungsform;
- Fig. 2: eine schematische Darstellung der thermischen und elektrischen Verbindung über erfindungsgemäße elektrische Kontaktelemente 100;
- Fig. 3a,b: eine schematische Darstellung von Aufbau und Wirkungsweise des erfindungsgemäßen elektrischen Kontaktelements 100 gemäß einer Ausführungsform;
- Fig. 4: eine schematische Darstellung der Wirkungsweise des erfindungsgemäßen elektrischen Kontaktelements 100 gemäß einer Ausführungsform;
- Fig. 5a-d: schematische Darstellungen alternativer Ausführungsformen des erfindungsgemäßen elektrischen Kontaktelements 100;
- Fig. 6a,b: eine schematische Darstellung der Wirkungsweise des erfindungsgemäßen elektrischen Kontaktelements 100 gemäß einer Ausführungsform;
- Fig. 7: eine 3-D Darstellung eines erfindungsgemäßen elektrischen Kontaktelements 100 gemäß einer Ausführungsform;

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

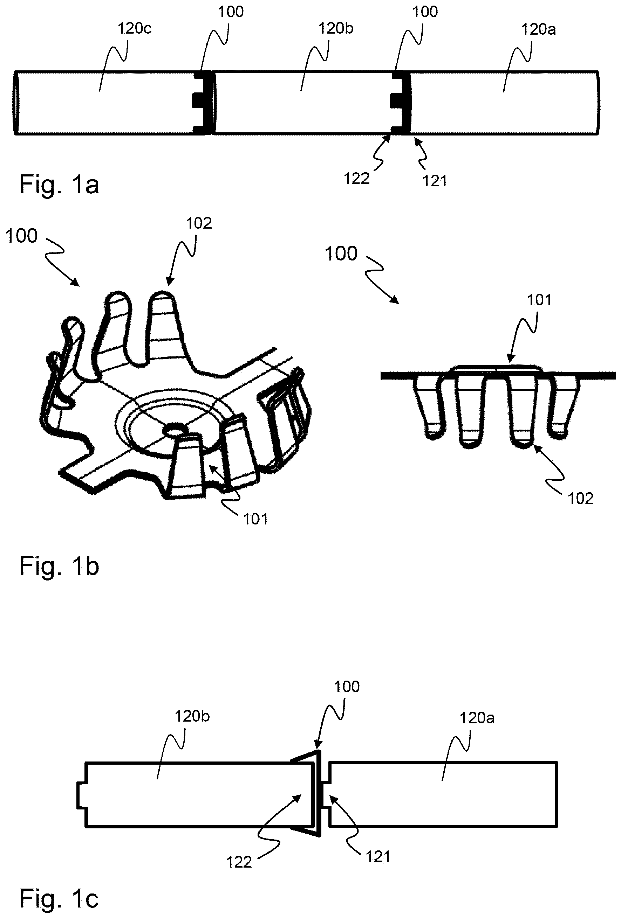

Fig. 1a zeigt eine 3-D Darstellung der seriellen Verschaltung von Batteriezellen, hier am Beispiel von Rundzellen.

In diesem Beispiel sind drei Batteriezellen 120a, 120b, 120c seriell miteinander elektrisch verschaltet. Jede Batteriezelle 120a, 120b, 120c weist einen Pluspol 121 bzw. einen ersten Pol 121 und einen Minuspol 122 bzw. einen zweiten Pol auf. Die serielle Verschaltung erfolgt über elektrische Kontaktelemente 100, wie in dieser Offenbarung vorgestellt.

Die serielle Verschaltung der Rundzellen 120a, 120b, 120c kann nach dem folgenden Schema realisiert werden: Auf den Pluspol 121 einer Rundzelle 120a (zum Beispiel mit dem Format 2170) wird ein elektrisches Kontaktelement 100 bzw. eine Zellkrone 100 gemäß der Darstellung in Figur 1b aufgeschweißt oder anderweitig befestigt. In dieses elektrische Kontaktelement 100 bzw. Zellkrone 100 wird für die serielle Verschaltung eine weitere Zelle 120b bzw. benachbarte Zelle 120b mit dem negativen Zellpol 122 eingesteckt gemäß der Darstellung in Figur 1a. Der elektrische, mechanische und thermische Kontakt erfolgt primär über die Aufsteckelemente 102 des elektrischen Kontaktelements 100 bzw. die Kontaktfinger 102 der Zellkrone 100, die auf den Minuspol 122 der benachbarten Zelle 100b drücken. Zur Vereinfachung wird die Serienverschaltung entsprechend Figur 1c dargestellt.

Als erster Pol 121 wird hier der Pluspol bezeichnet und als zweiter Pol 122 der Minuspol. In einer alternativen Ausführung der Zellen kann auch der Minuspol als erster Pol 121 bezeichnet sein und der Pluspol als zweiter Pol 122.

Während Figur 1a Rundzellen darstellt, um das Prinzip in vereinfachter Weise zu veranschaulichen, kann das hier vorgestellte elektrische Kontaktelement auch zur Kontaktierung von Prisma-Zellen genutzt werden, was im Folgenden aber nicht weiter ausgeführt wird.

Fig. 1b zeigt eine 3-D Darstellung eines erfindungsgemäßen elektrischen Kontaktelements 100 gemäß einer Ausführungsform.

Das elektrische Kontaktelement 100 dient zum elektrischen, z.B. seriellen und/oder parallelen Verschalten von Batteriezellen 120a, 120b, wie in den Figuren 1a und 1c dargestellt, für batterie-elektrische Fahrzeuge.

Das elektrische Kontaktelement 100 weist ein elektrisch leitendes Basiselement 101 auf, das mit einem ersten Pol 121 einer Batteriezelle 120a elektrisch kontaktierbar ist, wie in den Figuren 1a und 1c beispielhaft dargestellt.

Das elektrische Kontaktelement 100 weist ferner ein oder mehrere aus dem Basiselement 101 hervorspringende elektrisch leitende Aufsteckelemente 102 auf, die temperaturabhängig biegbar sind.

Die ein oder mehreren Aufsteckelemente 102 nehmen bei einer ersten Temperatur eine erste Biegestellung ein, bei der sie auf einen zweiten Pol 122 einer benachbarten Batteriezelle 120b aufsteckbar sind, um eine elektrische Steckverbindung herzustellen, wie in den Figuren 1a und 1c beispielhaft dargestellt.

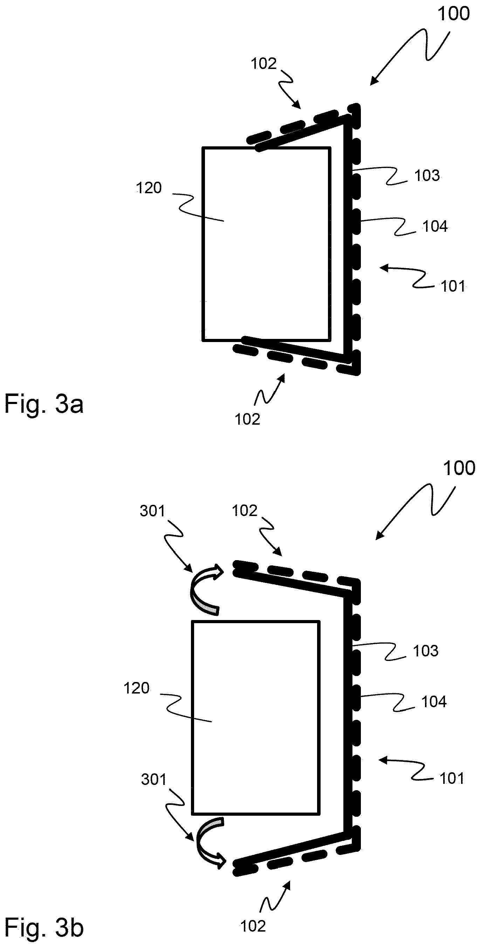

Die ein oder mehreren Aufsteckelemente 102 nehmen bei einer zweiten Temperatur, die höher ist als die erste Temperatur, eine zweite Biegestellung ein, bei der sich die Steckverbindung der ein oder mehreren Aufsteckelemente 102 mit dem zweiten Pol 122 der benachbarten Batteriezelle 120b löst, wie in den Figuren 3b, 5c, 5d und 6b beispielhaft dargestellt.

Das Basiselement 101 kann mit dem ersten Pol 121 der Batteriezelle 120a stoffschlüssig verbindbar sein. Damit entsteht ein fester elektrischer und thermischer Kontakt, beispielsweise über eine Schweißverbindung oder eine Lötverbindung.

Die erste Temperatur liegt beispielsweise unterhalb einer kritischen Temperatur, bei welcher die Batteriezelle 120a in einen Thermischen Runaway Zustand übergeht. Die zweite Temperatur liegt beispielsweise oberhalb der kritischen Temperatur. Damit erfolgt ein Aufbiegen der Aufsteckelemente 102 und damit ein Lösen des elektrischen und thermischen Kontakts der Batteriezelle 120a zur benachbarten Batteriezelle 120b erst dann, wenn die Batteriezelle sich in einem kritischen Zustand befindet, also im Thermal Runaway Zustand.

Das Basiselement 101 und die ein oder mehreren Aufsteckelemente 102 können zumindest teilweise aus einem Bimetall geformt sein, das aus zwei Metallen unterschiedlicher Wärmeausdehnungskoeffizienten aufgebaut ist, wie zu den Figuren 3a und 3b beispielsweise näher dargestellt.

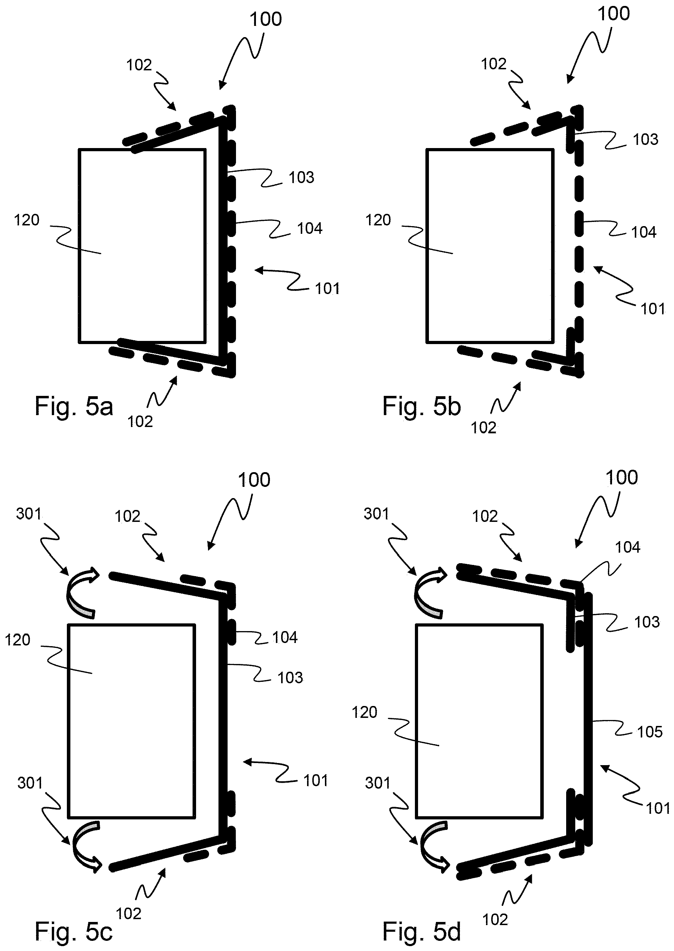

Das Basiselement 101 und die ein oder mehreren Aufsteckelemente 102 sind beispielsweise zumindest in einem Übergangsbereich, in dem die ein oder mehreren Aufsteckelemente 102 aus dem Basiselement 101 hervorspringen, aus dem Bimetall geformt, wie zum Beispiel in den Figuren 5a bis 5d näher dargestellt.

Das Bimetall kann aus einem ersten Metall 103 und einem zweiten Metall 104 bestehen, wobei das erste Metall 103 einen höheren Wärmeausdehnungskoeffizienten aufweist als das zweite Metall 104. Das erste Metall 103 ist beispielsweise nur innerhalb des Übergangsbereichs auf einer Außenseite oder einer Innenseite des Kontaktelements 100 ausgeformt, wie zum Beispiel in den Figuren 5b und 5c näher dargestellt.

Beispielsweise können die ein oder mehreren Aufsteckelemente 102 aus dem Bimetall geformt sein und das Basiselement 101 kann aus einem dritten Material 105 geformt sein. Die ein oder mehreren Aufsteckelemente 102 können beispielsweise in dem Übergangsbereich auf das dritte Material 105 des Basiselements 101 gefügt sein, wie in Figur 5d näher dargestellt.

Das Basiselement 101 und die ein oder mehreren Aufsteckelemente 102 können beispielsweise aus einem Blechstück geformt sein.

Das Blechstück kann kronenförmig ausgebildet sein und ein rundes oder eckiges Kopfstück aufweisen, welches das Basiselement 101 ausbildet, von dem sternförmig mehrere Zacken hervorspringen, welche die ein oder mehreren Aufsteckelemente 102 ausbilden, wie in Figur 1b dargestellt.

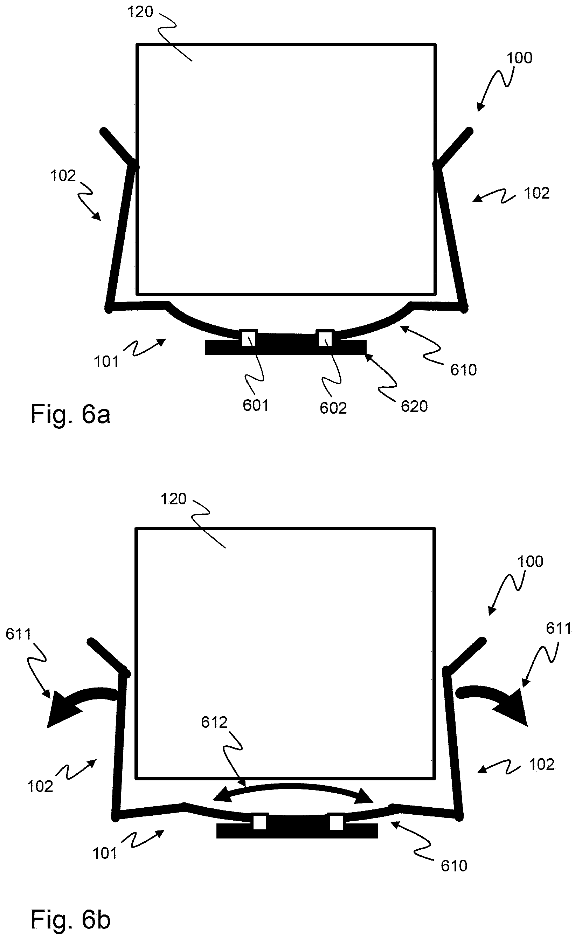

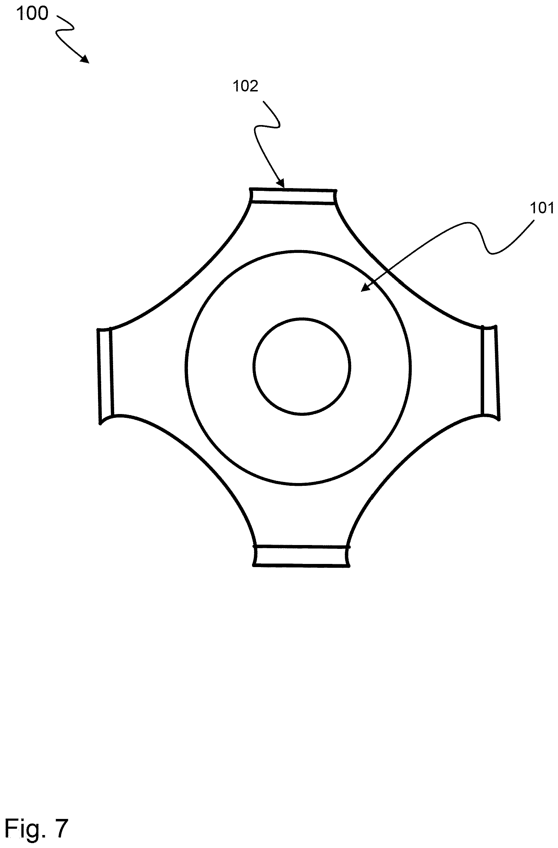

Das elektrische Kontaktelement 100 kann sich bei der ersten Temperatur in einem metastabilen ersten Zustand befinden, in dem die ein oder mehreren Aufsteckelemente 102 auf den zweiten Pol 122 der benachbarten Batteriezelle 120b aufsteckbar sind. Das elektrische Kontaktelement 100 kann beim Übergang zu der zweiten Temperatur einen stabilen zweiten Zustand einnehmen, in dem die ein oder mehreren Aufsteckelemente 102 nicht mehr auf den zweiten Pol 122 der benachbarten Batteriezelle 120b aufsteckbar sind und das elektrische Kontaktelement 100 nicht mehr in den ersten Zustand zurückkehren kann, wie beispielsweise in den Figuren 6a, 6b und 7 dargestellt.

Fig. 1c zeigt eine schematische Darstellung des elektrischen Kontaktelements 100 im Profil.

Die ein oder mehreren Aufsteckelemente 102 des elektrischen Kontaktelements 100 nehmen bei einer ersten Temperatur eine erste Biegestellung ein, bei der sie auf den zweiten Pol 122 der benachbarten Batteriezelle 120b aufsteckbar sind, um eine elektrische Steckverbindung herzustellen. In Figur 1c ist diese erste Biegestellung dargestellt. Die Aufsteckelemente 102 des elektrischen Kontaktelements 100 sind auf den zweiten Pol 122 bzw. Minuspol der benachbarten Batteriezelle 120b aufgesteckt.

Das elektrisch leitende Basiselement 101 ist mit dem ersten Pol 121 bzw. Pluspol der Batteriezelle 120a elektrisch kontaktiert, beispielsweise über eine Schweißung des Basiselements 101 mit dem Pluspol 121, wie in Figure 1c beispielhaft dargestellt.

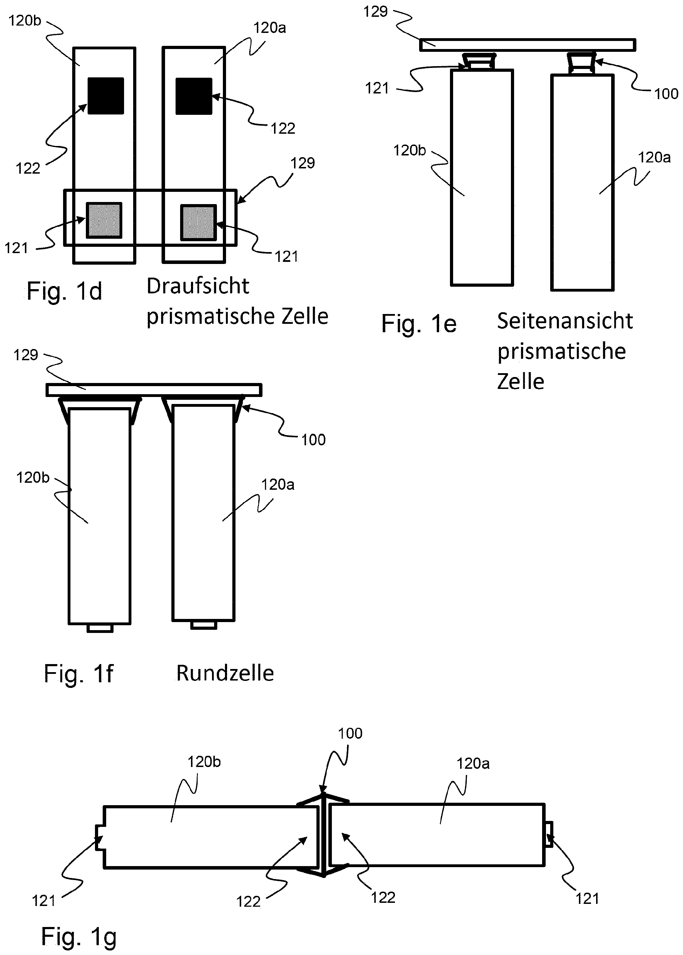

Fig. 1d zeigt eine Draufsicht auf eine Verschaltung von zwei prismatischen Batteriezellen gemäß einer Ausführungsform.

Die prismatische Batteriezelle 120a kann mit der benachbarten prismatische Batteriezelle 120b über eine Stromschiene 129 elektrisch verbunden sein, zum Beispiel parallel verschaltet, wie in Figur 1d gezeigt. Die Stromschiene 129 kann über ein elektrisches Kontaktelement 100 auf einen ersten Pol 121 der Batteriezelle 120a und auf einen erste Pol 121 der benachbarten Batteriezelle 120b aufgesteckt sein. In gleicher Weise können auch die zweiten Pole 122 der beiden Batteriezellen 120a, 120b über eine zweite Stromschiene miteinander verbunden sein (nicht dargestellt). Alternativ kann die Stromschiene 129 auch auf den ersten Pol 121 der Batteriezelle 120a und den zweiten Pol 122 der benachbarten Batteriezelle 120b aufgesteckt sein (nicht dargestellt).

Fig. 1e zeigt eine Seitenansicht auf die Verschaltung von zwei prismatischen Batteriezellen der Figur 1d. In der Seitenansicht ist zu erkennen, wie das elektrische Kontaktelement 100 auf die ersten Pole 121 der beiden Batteriezellen 120a, 120b aufgesteckt ist. Das Basiselement 101 kann beispielsweise mit der Stromschiene 129 verschweißt sein und die Aufsteckelemente 102 lassen sich auf die Pole 121 der Batteriezellen 120a, 120b aufstecken, um eine elektrische und thermische Verbindung herzustellen.

Fig. 1f zeigt eine Seitenansicht auf eine parallele Verschaltung von zwei Rundzellen gemäß einer Ausführungsform. In der Seitenansicht ist zu erkennen, wie das elektrische Kontaktelement 100 auf die zweiten Pole 122 der beiden Batteriezellen 120a, 120b aufgesteckt ist. Über die Stromschiene 129 sind die beiden elektrischen Kontaktelemente 100, welche auf die Zellen 120a, 120b aufgesteckt sind, elektrisch und thermisch miteinander verbunden, beispielsweise über eine Verschweißung. Alternativ können auch die ersten Pole 121 der beiden Batteriezellen 120a, 120b oder jeweils gegensätzliche Pole der beiden Batteriezellen 120a, 120b über die elektrischen Kontaktelemente 100 und die Stromschiene 129 miteinander verbunden sein, was hier nicht dargestellt ist.

Das Basiselement 101 kann beispielsweise mit der Stromschiene 129 verschweißt sein und die Aufsteckelemente 102 lassen sich auf die Pole 121 der Batteriezellen 120a, 120b aufstecken, um eine elektrische und thermische Verbindung herzustellen.

Fig. 1g zeigt eine Seitenansicht auf eine parallele Verschaltung von zwei Batteriezellen mit beidseitiger Steckverbindung gemäß einer Ausführungsform. In dieser Ausführungsform hat das elektrische Kontaktelement 100 Aufsteckelemente 102, die in beide Richtungen zeigen, um die zwei Batteriezellen 120a, 120b parallel miteinander zu verschalten.

Die Aufsteckelemente 102 können in der ersten Biegestellung sowohl auf den zweiten Pol 122 der Batteriezelle 120a als auch auf den zweiten Pol 122 oder einen ersten Pol 121 der benachbarten Batteriezelle 120b aufgesteckt werden, um eine beidseitige Steckverbindung zwischen der Batteriezelle 120a und der benachbarten Batteriezelle 120b herzustellen.

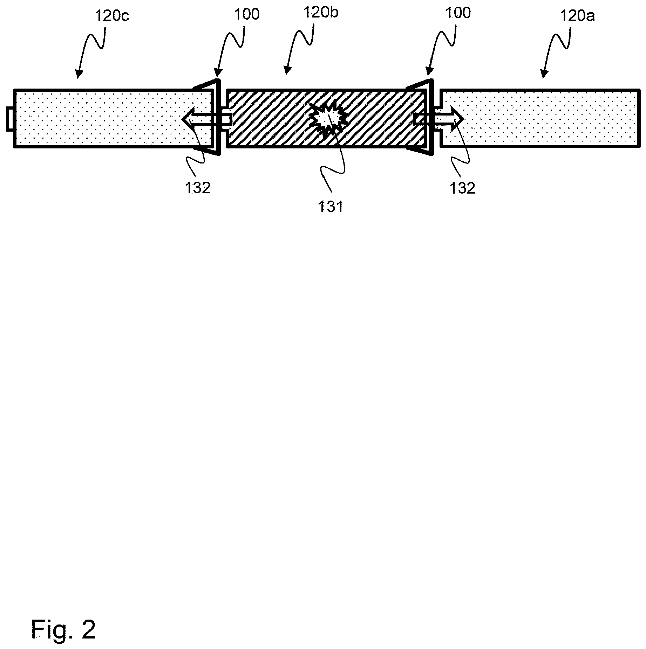

Fig. 2 eine schematische Darstellung der thermischen und elektrischen Verbindung über erfindungsgemäße elektrische Kontaktelemente 100.

Dargestellt ist eine Anordnung von Rundzellen wie sie in Elektro- und Hybridfahrzeugen eingesetzt werden können. Die Zellen 120a, 120b, 120c können in mehreren axialen Reihen angeordnet sein, wobei immer der Pluspol 121 einer Zelle mit dem Minuspol 122 der nächsten Zelle verbunden ist. Die Nachbarzellen 120a, 120c werden über den thermischen Kontakt des elektrischen Kontaktelements 100 bzw. der Zellkrone 100 zu der Zelle 120b erhitzt. In diesem Beispiel der Figur 2 geht die mittlere Zelle 120b in den Thermal Runaway Zustand 131 und wird heiß. Die beiden äußeren Zellen 120a, 120c werden über den thermischen Kontakt 132 mittels des elektrischen Kontaktelements 100 bzw. der Zellkrone 100 zu der mittleren Zelle 120b erhitzt.

Bei einem Thermischen Event kommt es zur Übertragung von Wärme 132 von der reagierenden Zelle 120b zu den Nachbarzellen 120a, 120c über den seriellen elektromechanischen Kontakt, wie in Figur 2 dargestellt. Darüber hinaus fließen durch die beschädigte Zelle 120b und die Nachbarzellen 120a, 120c hohe elektrische Ströme, die zur weiteren Erwärmung und Überladung von Nachbarzellen führen können. Diese thermischen und elektrischen Effekte können zum Thermal Runaway der Nachbarzellen 120a, 120c führen.

Um dem Effekt der Erwärmung und Überladung von Nachbarzellen entgegenzuwirken, kann die Zellkrone 100 bei hohen Temperaturen den Kontakt zum Minuspol der Nachbarzelle 120a, 120c lösen. Diese Funktion kann erreicht werden, indem die Zellkrone 100 aus Bi-Metall aufgebaut wird.

Fig. 3a und 3b zeigen eine schematische Darstellung von Aufbau und Wirkungsweise des erfindungsgemäßen elektrischen Kontaktelements 100 gemäß einer Ausführungsform.

Dargestellt sind die erste Biegestellung in Figur 3a, welche bei der ersten Temperatur unterhalb eines Thermischen Runaway Zustands der Zelle 120 durch die Aufsteckelemente 102 eingenommen werden, und die zweite Biegestellung in Figur 3b, welche bei der zweiten Temperatur oberhalb des Thermischen Runaway Zustands der Zelle 120 durch die Aufsteckelemente 102 eingenommen werden.

Figur 3a zeigt beispielsweise eine Bimetall-Zellkrone 100 mit einem ersten Metall 103 und einem zweiten Metall 104 bei Raumtemperatur (RT) mit elektrischem Kontakt zur Zelle 120. Figur 3b zeigt die Bimetall-Zellkrone 100 bei einer wesentlich höheren Temperatur T»RT ohne elektrischen Kontakt zur Zelle 120. Die erhöhte Temperatur führt zur Aufbiegung 301 der Zellkronenfinger 102.

Das elektrische Kontaktelement 100 bzw. die Zellkrone 100 kann vollständig oder in Teilen aus zwei unterschiedlichen Metallen aufgebaut sein (=Bi-Metall). Die beiden Metalle sind unmittelbar miteinander verbunden und besitzen unterschiedliche Hitzeausdehnungskoeffizienten. Ähnlich dem Prinzip eines Bi-Metallthermometers verändert das Bauteil seine Form in Abhängigkeit der Temperatur. Dabei sind die Metalle so angeordnet, dass sich die Kontaktfinger 102 der Zellkrone 100 bzw. die Aufsteckelemente 102 des elektrischen Kontaktelements 100 bei starker Erwärmung nach außen biegen.

Figur 3a zeigt eine kontaktierte Zelle im Normalbetrieb. Der elektrische Kontakt zwischen Zelle 120 und Zellkrone 100 ist hergestellt. Im Falle eines Thermal Runaway einer Zelle 120 kommt es zur Erwärmung der Zellkrone 100. Bei erhöhter Temperatur verändert die Zellkrone 100 ihre Form und die Kontaktfinger 102 werden von der Zelle 100 weggebogen (siehe Figur 3b). Durch diese Biegung wird der elektro-mechanische Kontakt zur Nachbarzelle gelöst. Dadurch werden der Stromfluss und der Wärmefluss von der durchgegangenen Zelle zu den Nachbarzellen unterbrochen. Die Nachbarzellen werden nicht mehr erwärmt oder geladen und können daher nicht mehr thermisch durchgehen.

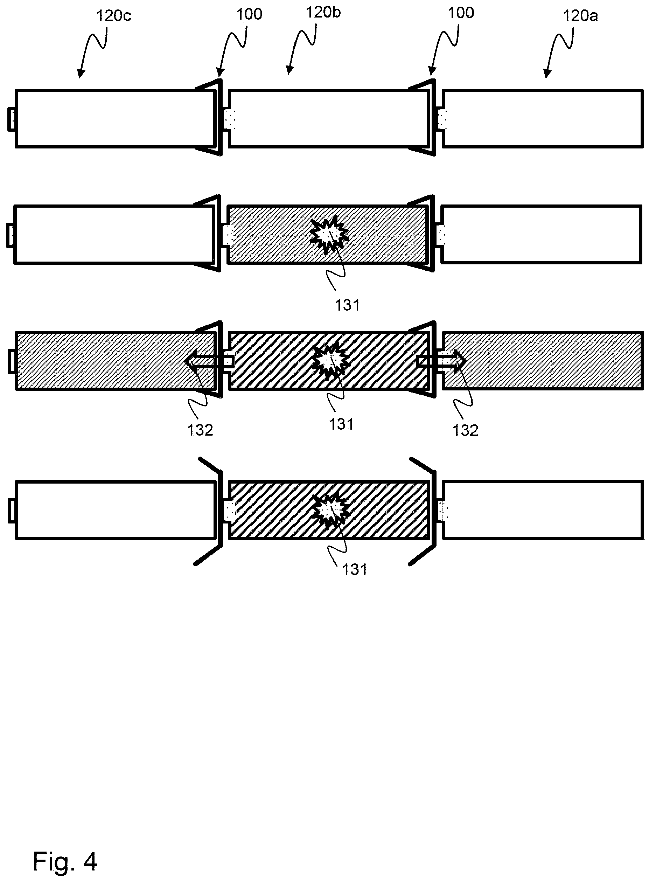

Fig. 4 zeigt eine schematische Darstellung der Wirkungsweise des erfindungsgemäßen elektrischen Kontaktelements 100 gemäß einer Ausführungsform.

Der Ausgangszustand der seriell verschalteten Batteriezellen 120a, 120b, 120c ist in der obersten Reihe dargestellt. Die Batteriezellen 120a, 120b, 120c sind über die elektrischen Kontaktelemente 100 bzw. Zellkronen 100 seriell miteinander verschaltet, wie oben beschrieben.

In der zweiten Reihe ist dargestellt, wie die mittlere Zelle 120b in den Thermal Runaway Zustand 131 geht. Die beiden Nachbarzellen 120a, 120c sind davon noch nicht betroffen.

In der dritten Reihe ist dargestellt, wie sich die beiden Nachbarzellen 120a, 120c langsam über die thermische Verbindung 132 (über die Zellkronen 100) mit der Zelle 120b erhitzen. Darüber hinaus kann Strom über die Serien-Verschaltung durch die Zelle im Thermal Runaway fließen und diese weiter erhitzen.

In der letzten Reihe ist schließlich dargestellt, wie die Aufsteckelemente 102 der elektrischen Kontaktelemente 100 sich lösen und die thermische Verbindung 132 zu den Nachbarzellen 120a, 120c unterbrechen. Die offenen Zellkronen 100 unterbrechen die Übertragung von Wärme. Die Trennung des elektrischen Kontaktes durch Aufbiegen der Zellkronen 100 unterbindet weiteres Aufheizen der Nachbarzellen 120a, 120c. Auf diese Weise wird die Propagation des Thermal Runaway Zustands auf die Nachbarzellen 120a, 120c verhindert.

Fig. 5a, 5b, 5c und 5d zeigen schematische Darstellungen alternativer Ausführungsformen des erfindungsgemäßen elektrischen Kontaktelements 100.

Die Funktionsweise der Bimetall-Zellkrone kann auf unterschiedliche Arten realisiert werden, wie in den Figuren 5a bis 5d dargestellt.

Figur 5a zeigt den Aufbau der Bimetall-Zellkrone 100. Die gesamte Krone 100 besteht aus der Bimetall-Materialpaarung.

Figur 5b zeigt einen alternativen Aufbau der Bimetall-Zellkrone 100. Die Materialpaarung ist lokal, zum Beispiel in den Biegungen der Kniekehle der Kontaktfinger angebracht.

Figur 5c zeigt einen alternativen Aufbau der Bimetall-Zellkrone 100. Die Materialpaarung ist lokal, zum Beispiel auf den Biegungen des Knies der Kontaktfinger angebracht.

Figur 5d zeigt einen alternativen Aufbau der Bimetall-Zellkrone 100. Die Kontaktfinger bestehen aus der Materialpaarung und werden auf ein drittes Material 105 gefügt.

Fig. 6a und 6b zeigen eine schematische Darstellung der Wirkungsweise des erfindungsgemäßen elektrischen Kontaktelements 100 gemäß einer Ausführungsform.

In dieser Ausführung des elektrischen Kontaktelements 100 befindet sich das elektrische Kontaktelement 100 bei der ersten Temperatur in einem metastabilen ersten Zustand, in dem die ein oder mehreren Aufsteckelemente 102 auf den zweiten Pol 122 der benachbarten Batteriezelle 120b aufgesteckt sind, wie in Figur 6a dargestellt. Das elektrische Kontaktelement 100 nimmt beim Übergang zu der zweiten Temperatur einen stabilen zweiten Zustand ein, wie beispielhaft in Figur 6b dargestellt, in dem die ein oder mehreren Aufsteckelemente 102 nicht mehr auf den zweiten Pol 122 der benachbarten Batteriezelle 120b aufsteckbar sind und das elektrische Kontaktelement 100 nicht mehr in den ersten Zustand zurückkehren kann.

Das elektrische Kontaktelement 100 kann hier entsprechend einem Zellverbinder mit Bimetall-Effekt und Knackfrosch oder Schnappscheibe ausgebildet sein.

Der Knackfrosch ist eine Feder, die aus einem Streifen Federstahl besteht. Der Stahl ist so geprägt, dass er einen stabilen und einen metastabilen Zustand aufweist. Der metastabile Zustand ist stabil gegen kleine Änderungen, jedoch instabil gegenüber größeren Änderungen. Durch Krafteinwirkung wird er verbogen, bis er plötzlich durch Beulen den metastabilen Zustand durchläuft. Das plötzliche Umspringen an diesem Punkt erzeugt das laute namensgebende Knackgeräusch. Lässt die Kraft wieder nach, erfolgt das Zurückspringen, bei dem nochmals ein lautes Knacken erzeugt wird. Eine analoge Anwendung sind Schnappscheiben, die einen spürbaren Druckpunkt aufweisen sollen. Die Knackfeder ist hier auch das kontaktgebende Bauteil und wird Schnappscheibe genannt.

Sobald die Temperatur in den kritischen Zustand übergeht, dehnen sich die Aufsteckelemente 102 nach außen aus 611 und lösen die Verbindung zur Zelle 120. Das elektrische Kontaktelement 100 kann hier einen Knackfrosch bzw. eine Schnappscheibe 610 darstellen, die beim Übergang in den von der Zelle 120 gelösten Zustand diesen durch Einnahme einer stabilen Biegung 612 des Basiselements 101 und der Aufsteckelemente 102 beibehält und nicht mehr in den ursprünglichen Kontaktierungszustand zurückkehren kann.

Trotz einem Absinken der Temperatur behält der Zellverbinder 100 durch den Knackfrosch die Geometrie bei.

Auch in dieser Ausführung kann der Pluspol 620 der benachbarten Zelle (nicht dargestellt in Figur 6a und 6b) über Schweißungen 601, 602 mit dem Knackfrosch bzw. Basiselement 610 verbunden sein.

Fig. 7 zeigt eine 3-D Darstellung eines erfindungsgemäßen elektrischen Kontaktelements 100 gemäß einer Ausführungsform.

In dieser Ausführung weist das elektrische Kontaktelement 100 ein elektrisch leitendes Basiselement 101 und eine beispielhafte Anzahl von vier Aufsteckelementen bzw. Finger 102 auf. Das elektrische Kontaktelement 100 ist hier beispielhaft als Knackfrosch realisiert, der bei einem einmal erfolgten Übergang in den gelösten Zustand der Aufsteckelemente 102 trotz Absinken der Temperatur diesen Zustand beibehält, wie oben zu den Figuren 6a und 6b beschrieben.

### BEZUGSZEICHENLISTE

- 100: elektrisches Kontaktelement bzw. Zellkrone
- 101: elektrisch leitendes Basiselement
- 102: Aufsteckelemente bzw. Kontaktfinger der Zellkrone
- 103: erstes Metall eines Bimetall-Streifens
- 104: zweites Metall eines Bimetall-Streifens
- 105: drittes Material
- 120: Batteriezelle
- 120a, 120b: Batteriezellen
- 120c: Batteriezelle
- 131: Thermal Runaway Zustand
- 132: thermischer Pfad von Batteriezelle zu benachbarter Batteriezelle

- 121: erster Pol bzw. Pluspol der Batteriezelle
- 122: zweiter Pol bzw. Minuspol der Batteriezelle
- 129: Stromschiene

- 301: Aufklappen von erster Biegestellung in zweite Biegestellung des Aufsteckelements
- 601, 602: Schweißung
- 620: Pluspol der Zelle
- 610: Knackfrosch bzw. Basiselement
- 611: Umbiegen der Aufsteckelemente
- 612: stabiler Zustand des Knackfrosches

## Patentansprüche

1. Elektrisches Kontaktelement (100) zum elektrischen Verschalten von Batteriezellen (120a, 120b) für batterie-elektrische Fahrzeuge, wobei das elektrische Kontaktelement (100) folgendes aufweist:
ein elektrisch leitendes Basiselement (101), das mit einem ersten Pol (121) einer Batteriezelle (120a) elektrisch kontaktierbar ist; und
ein oder mehrere aus dem Basiselement (101) hervorspringende elektrisch leitende Aufsteckelemente (102), die temperaturabhängig biegbar sind;
wobei die ein oder mehreren Aufsteckelemente (102) bei einer ersten Temperatur eine erste Biegestellung einnehmen, bei der sie auf einen zweiten Pol (122) einer benachbarten Batteriezelle (120b) aufsteckbar sind, um eine elektrische Steckverbindung herzustellen; und
wobei die ein oder mehreren Aufsteckelemente (102) bei einer zweiten Temperatur, die höher ist als die erste Temperatur, eine zweite Biegestellung einnehmen, bei der sich die Steckverbindung der ein oder mehreren Aufsteckelemente (102) mit dem zweiten Pol (122) der benachbarten Batteriezelle (120b) löst.

2. Elektrisches Kontaktelement (100) nach Anspruch 1,
wobei das Basiselement (101) mit dem ersten Pol (121) der Batteriezelle (120a) und/oder einer Stromschiene (129) stoffschlüssig verbindbar ist,
wobei die Stromschiene (129) ausgebildet ist, eine oder mehrere Batteriezellen elektrisch zu verbinden.

3. Elektrisches Kontaktelement (100) nach Anspruch 1 oder 2,
wobei die ein oder mehreren Aufsteckelemente (102) in der ersten Biegestellung sowohl auf den ersten Pol (121) der Batteriezelle (120a) als auch auf einen ersten Pol (121) oder den zweiten Pol (122) der benachbarten Batteriezelle (120b) aufsteckbar sind, um eine beidseitige Steckverbindung zwischen der Batteriezelle (120a) und der benachbarten Batteriezelle (120b) herzustellen.

4. Elektrisches Kontaktelement (100) nach einem der vorstehenden Ansprüche,
wobei die erste Temperatur unterhalb einer kritischen Temperatur liegt, bei welcher die Batteriezelle (120a) in einen Thermischen Runaway Zustand übergeht; und
wobei die zweite Temperatur oberhalb der kritischen Temperatur liegt.

5. Elektrisches Kontaktelement (100) nach einem der vorstehenden Ansprüche,
wobei das Basiselement (101) und die ein oder mehreren Aufsteckelemente (102) zumindest teilweise aus einem Bimetall geformt sind, das aus zwei Metallen unterschiedlicher Wärmeausdehnungskoeffizienten aufgebaut ist.

6. Elektrisches Kontaktelement (100) nach Anspruch 5,
wobei das Basiselement (101) und die ein oder mehreren Aufsteckelemente (102) zumindest in einem Übergangsbereich, in dem die ein oder mehreren Aufsteckelemente (102) aus dem Basiselement (101) hervorspringen, aus dem Bimetall geformt sind.

7. Elektrisches Kontaktelement (100) nach Anspruch 6,
wobei das Bimetall aus einem ersten Metall (103) und einem zweiten Metall (104) besteht, wobei das erste Metall (103) einen unterschiedlichen Wärmeausdehnungskoeffizienten aufweist als das zweite Metall (104); und
wobei das erste Metall (103) nur innerhalb des Übergangsbereichs auf einer Außenseite oder einer Innenseite des Kontaktelements (100) ausgeformt ist.

8. Elektrisches Kontaktelement (100) nach Anspruch 6 oder 7,
wobei die ein oder mehreren Aufsteckelemente (102) aus dem Bimetall geformt sind und das Basiselement (101) aus einem dritten Material (105) geformt ist; und
wobei die ein oder mehreren Aufsteckelemente (102) in dem Übergangsbereich auf das dritte Material (105) des Basiselements (101) gefügt sind.

9. Elektrisches Kontaktelement (100) nach einem der vorstehenden Ansprüche,
wobei das Basiselement (101) und die ein oder mehreren Aufsteckelemente (102) aus einem Blechstück geformt sind.

10. Elektrisches Kontaktelement (100) nach Anspruch 9,
wobei das Blechstück kronenförmig ausgebildet ist und ein rundes oder eckiges Kopfstück aufweist, welches das Basiselement (101) ausbildet, von dem sternförmig mehrere Zacken hervorspringen, welche die ein oder mehreren Aufsteckelemente (102) ausbilden.

11. Elektrisches Kontaktelement (100) nach einem der vorstehenden Ansprüche,
wobei das elektrische Kontaktelement (100) sich bei der ersten Temperatur in einem metastabilen ersten Zustand befindet, in dem die ein oder mehreren Aufsteckelemente (102) auf den zweiten Pol (122) der benachbarten Batteriezelle (120b) aufsteckbar sind; und
wobei das elektrische Kontaktelement (100) beim Übergang zu der zweiten Temperatur einen stabilen zweiten Zustand einnimmt, in dem die ein oder mehreren Aufsteckelemente (102) nicht mehr auf den zweiten Pol (122) der benachbarten Batteriezelle (120b) aufsteckbar sind und das elektrische Kontaktelement (100) nicht mehr in den ersten Zustand zurückkehren kann.
